# EUROPEAN PATENT APPLICATION

(11) **EP 4 681 948 A1**
(43) Date of publication of application: **21.01.2026**
(21) Application number: 25190336.5
(22) Date of filing: 18.07.2025
(51) Int. Cl.: B60J 5/04, B60J 5/10

(54) **REINFORCEMENT FRAME FOR TAILGATE OF VEHICLE**

(30) Priority: 18.07.2024 IN 202441054819
(71) Applicant: Mahindra Electric Automobile Limited, Chengalpattu, Tamil Nadu 603204 (IN)
(72) Inventor: SINGH, Sukhjinder, 603004 Chengalpattu, Tamil Nadu (IN); PANDURANGAN, Venugopal, 603004 Chengalpattu, Tamil Nadu (IN); VINOTH, C, 603004 Chengalpattu, Tamil Nadu (IN); UNADKAT, Siddharth B, 603004 Chengalpattu, Tamil Nadu (IN); BAIRAGI, Ankan, 603004 Chengalpattu, Tamil Nadu (IN); BEHERA, Debasundar, 603004 Chengalpattu, Tamil Nadu (IN); S, Kavinraj, 603004 Chengalpattu, Tamil Nadu (IN)
(74) Representative: Office Freylinger

(57) **Abstract**

The present invention provides a reinforcement frame (100) for a tailgate of a vehicle, comprising: a first and second longitudinal members (102, 104) arranged at an angle relative to a vertical plane defined by at least a longitudinal axis (105) of the vehicle, and laterally separated from each other; and at least one of a first transverse member (108), a second transverse member (110), a third transverse member (112), and a fourth transverse member (114), wherein at least one of first transverse member (108), second transverse member (110), third transverse member (112), and fourth transverse member (114) couples the first longitudinal member (102) with the second longitudinal member (104), and wherein the at least one of first transverse member (108), second transverse member (110), third transverse member (112), and fourth transverse member (114) is arranged parallel to a transverse axis (107) of the vehicle.

## Description

### FIELD OF INVENTION

The present invention generally relates to the field of automobiles. In particular, the present invention relates to a vehicle tailgate with improved torsional stiffness.

### BACKGROUND OF THE INVENTION

This section is intended to provide information relating to the field of invention and thus, any approach or functionality described herein should not be assumed to qualify as prior art merely by its inclusion in this section.

Tailgates of vehicles are typically coupled to the body of the vehicle via two or more hinges having a common hinge axis, and during static and dynamic conditions of the tailgate, the loads act on the liftgate through the hinges. Due to small contact points between the tailgate and the body of the vehicle, there may be unbalanced loads acting on the tailgate. The tailgate is typically made of thin sheets of metal and the loads acting on the tailgate may cause deformation of the metal.

Generally, regions of the tailgate where such loads may act are reinforced using reinforcement elements. The reinforcement elements may be additional stiffening components arranged within the tailgate, at locations where loads may act, that are adapted to provide increased stiffness to the locations, such that the deformation occurring at such locations is limited.

However, the reinforcement elements are distributed at different locations, and are not connected to each other. As a result, the different reinforcement elements may not be able to share stresses and certain reinforcement elements may have to bear greater stresses than others, potentially leading to their failures earlier than the other reinforcement elements. Further, load does not get efficiently distributed throughout the liftgate structure, potentially hampering performance of the liftgate.

There is, therefore, a requirement in the art for a means to reinforce the tailgate of a vehicle that is durable and effective in providing additional support to the tailgate.

### SUMMARY OF THE INVENTION

This section is intended to introduce one or more aspects and/or embodiments of the present invention in a simplified form and is not intended to identify any key advantages or features of the present invention.

In an aspect of the present invention, there is provided a reinforcement frame for a tailgate of a vehicle, comprising: a first longitudinal member and a second longitudinal member arranged at an angle relative to a vertical plane defined by at least a longitudinal axis of the vehicle, wherein the first longitudinal member and the second longitudinal member are laterally separated from each other; and at least one of a first transverse member, a second transverse member, a third transverse member, and a fourth transverse member, characterized in that at least one of first transverse member, second transverse member, third transverse member, and fourth transverse member couples the first longitudinal member with the second longitudinal member, and wherein the at least one of first transverse member, second transverse member, third transverse member, and fourth transverse member is arranged parallel to a transverse axis of the vehicle.

In an aspect of the present invention, the first longitudinal member comprises a lower section, a middle section, and an upper section, wherein the lower section is fixedly coupled to a lower end of the middle section, and the upper section is fixedly coupled to an upper end of the middle section.

In an aspect of the present invention, the lower section, middle section, and upper section are coupled via at least a weld or at least a fastener.

In an aspect of the present invention, the second longitudinal member comprises a lower section, a middle section, and an upper section, and wherein the lower section is coupled to a lower end of the middle section, and the upper section is coupled to an upper end of the middle section.

In an aspect of the present invention, the lower section, middle section, and upper section are coupled via at least a weld or at least a fastener.

In an aspect of the present invention, the first transverse member is fixedly coupled between the first longitudinal member and the second longitudinal member at a top end of the reinforcement frame.

In an aspect of the present invention, the second transverse member is fixedly coupled between the first longitudinal member and the second longitudinal member, and is displaced from the first transverse member along a first axis.

In an aspect of the present invention, the third transverse member is fixedly coupled between the first longitudinal member and the second longitudinal member, and is displaced from the second transverse member along a second axis.

In an aspect of the present invention, the fourth transverse member is fixedly coupled between the first longitudinal member and the second longitudinal member, and is displaced from the third transverse member along the second axis.

In another aspect of the present invention, there is provided a tailgate for a vehicle, comprising: an inner panel assembly; an outer panel assembly; and a reinforcement frame comprising: a first longitudinal member and a second longitudinal member arranged at an angle relative to a vertical plane defined by at least a longitudinal axis of the vehicle, wherein the first longitudinal member and the second longitudinal member are laterally separated from each other; and at least one of a first transverse member, a second transverse member, a third transverse member, and a fourth transverse member, characterized in that at least one of first transverse member, second transverse member, third transverse member, and fourth transverse member couples the first longitudinal member with the second longitudinal member, and wherein the at least one of first transverse member, second transverse member, third transverse member, and fourth transverse member is arranged parallel to a transverse axis of the vehicle, characterized in that the reinforcement frame is arranged between the inner panel assembly and the outer panel assembly along a longitudinal axis of the vehicle.

### BRIEF DESCRIPTION OF THE ACCOMPANYING DRAWINGS

The present invention, both as to its organization and manner of operation, together with further objects and advantages, may best be understood by reference to the description, taken in connection with the accompanying drawings. These and other details of the present invention will be described in connection with the accompanying drawings, which are furnished only by way of illustration and not in limitation of the scope of the present invention.
FIG. 1 illustrates a schematic view of a tailgate of the vehicle, according to an embodiment of the present invention; and
FIG. 2 illustrates a schematic view of a reinforcement frame of the tailgate of the vehicle, according to an embodiment of the present invention.

### DETAILED DESCRIPTION OF THE INVENTION

In the following description, for the purposes of explanation, various specific details are set forth in order to provide a thorough understanding of one or more embodiments of the present invention. It will be apparent, however, that embodiments of the present invention may be practiced without these specific details. Several features described hereafter may each be used independently of one another or in any combination with other features. An individual feature may not address any of the problems discussed above or may address only some of the problems discussed above. Some of the problems discussed above may not be fully addressed by any of the features described herein. Example embodiments of the present invention are described below, as illustrated in various drawings, in which same reference numerals refer to the same parts throughout the different drawings.

The present invention provides a tailgate for a vehicle. The tailgate comprises a reinforcement frame of the present invention. The tailgate comprises an inner panel assembly and an outer panel assembly. The reinforcement frame is adapted to be arranged between the inner panel assembly and the outer panel assembly, along the longitudinal axis of the vehicle. In an embodiment, the reinforcement frame is arranged between the inner panel assembly and the outer panel assembly, such that ends of the reinforcement frame correspond with respective edges of the tailgate. In other words, a top end and a bottom end of the reinforcement frame corresponds with the top edge and the bottom edge of the tailgate, respectively. Further, a first longitudinal member and a second longitudinal member of the reinforcement frame are assembled to correspond with the first side edge and the second side edge of the tailgate, respectively.

The present invention provides the reinforcement frame for the tailgate of the vehicle. The reinforcement frame comprises a first longitudinal member and a second longitudinal member arranged at an angle relative to a vertical plane defined by a longitudinal axis of the vehicle and a vertical axis of the vehicle. The first longitudinal member and the second longitudinal member are laterally separated from each other. The reinforcement frame comprises at least one of a first transverse member, a second transverse member, a third transverse member, and a fourth transverse member, characterized in that at least one of first transverse member, second transverse member, third transverse member, and fourth transverse member couples the first longitudinal member with the second longitudinal member. The at least one of first transverse member, second transverse member, third transverse member, and fourth transverse member is arranged parallel to a transverse axis of the vehicle.

In an embodiment, the first longitudinal member of the reinforcement frame is located towards a first side edge of the tailgate of the vehicle. The first longitudinal member comprises a lower section, a middle section, and an upper section. In an embodiment, the lower section is located towards a bottom end of the reinforcement frame, the upper section is located towards a top end of the reinforcement frame, and the middle section is located in between the lower and upper sections. In an embodiment, the middle section comprises lower and upper ends. In an embodiment, the lower end of the middle section is located towards the bottom end of the reinforcement frame. In an embodiment, the upper end of the middle section is located towards the top end of the reinforcement frame. The lower section is fixedly coupled to the lower end of the middle section. The upper section is fixedly coupled to the upper end of the middle section. In an embodiment, a lower portion of the middle section towards the lower end is generally colinear with the lower section. In an embodiment, an upper portion of the middle section towards the upper end is at an angle relative to the lower portion. In other words, the middle section is bent along its length. In an embodiment, the bend is in a middle portion of the middle section. In an embodiment, the upper portion of the middle section extends substantially diagonally relative to the first and third axes. In an embodiment, the lower portion of the middle section extends substantially diagonally relative to the second and third axes. In an embodiment, the lower section, middle section, and upper section are coupled via at least a weld or at least a fastener. In an embodiment, at least the fastener is selected from a group consisting of screws, bolts, and rivets. In another embodiment, the lower section, the middle section, and the upper section form an integrated first longitudinal member.

Similarly, in an embodiment, the second longitudinal member of the reinforcement frame is located towards a second side edge of the tailgate of the vehicle, opposite the first side edge. The second longitudinal member comprises a lower section, a middle section, and an upper section. In an embodiment, the lower section is located towards a bottom end of the reinforcement frame, the upper section is located towards a top end of the reinforcement frame, and the middle section is located in between the lower and upper sections. In an embodiment, the middle section comprises lower and upper ends. In an embodiment, the lower end of the middle section is located towards the bottom end of the reinforcement frame. In an embodiment, the upper end of the middle section is located towards the top end of the reinforcement frame. The lower section is fixedly coupled to the lower end of the middle section. The upper section is fixedly coupled to the upper end of the middle section. In an embodiment, the lower portion of the middle section towards the lower end is generally colinear with the lower section. In an embodiment, an upper portion of the middle section towards the upper end is at an angle relative to the lower portion. In other words, the middle section is bent along its length. In an embodiment, the bend is in a middle portion of the middle section. In an embodiment, the upper portion of the middle section extends substantially diagonally relative to the first and third axes. In an embodiment, the lower portion of the middle section extends substantially diagonally relative to the second and third axes. In an embodiment, the lower section, middle section, and upper section are coupled via at least a weld or at least a fastener. In an embodiment, at least the fastener is selected from a group consisting of screws, bolts, and rivets. In another embodiment, the lower section, the middle section, and the upper section form an integrated second longitudinal member.

In an embodiment, the upper sections, and the upper portion of the middle sections of the first and second longitudinal members, respectively, lie in a first plane defined by the first axis and the third axis. The third axis is parallel to the transverse axis of the vehicle. In an embodiment, the upper sections, and the upper portion of the middle sections, lie at an angle relative to the first axis. In an embodiment, the first axis also lies in the vertical plane of the longitudinal axis of the vehicle, and at an angle relative to the vertical axis of the vehicle.

Similarly, in an embodiment, the lower sections, and the lower portion of the middle sections, of the first and second longitudinal members, respectively, lie in a second plane defined by the second axis and the third axis. In an embodiment, the lower sections, and the lower portion of the middle sections, respectively, lie at an angle relative to the second axis. In an embodiment, the second axis also lies in the vertical plane of the longitudinal axis of the vehicle, and at an angle relative to the vertical axis of the vehicle.

In an embodiment, the first axis is different from the second axis. Hence, the first plane is different than the second plane. Further, in an embodiment, each of the first plane and the second plane comprise a third axis. In an embodiment, a top edge and/or bottom edge of the tailgate of the vehicle lies parallel to the third axis. The third axis is parallel to the transverse axis of the vehicle.

In an embodiment, the first transverse member is fixedly coupled between the first longitudinal member and the second longitudinal member at the top end of the reinforcement frame. In an embodiment, the first transverse member is fixedly coupled between the upper sections of the respective first longitudinal member and the second longitudinal member. In an embodiment, the first transverse member is coupled between the first and second longitudinal members via at least a weld or at least a fastener. In an embodiment, at least the fastener is selected from a group consisting of screws, bolts, and rivets. In an embodiment, the first transverse member lies in the first plane defined by the first axis and the third axis, and is substantially parallel to the transverse axis of the vehicle.

In an embodiment, the second transverse member is fixedly coupled between the first longitudinal member and the second longitudinal member. The second transverse member is located towards the top end of the reinforcement frame and displaced from the first transverse member along the first axis. In an embodiment, the second transverse member is fixedly coupled between the first longitudinal member and the second longitudinal member at respective middle sections of the first and second longitudinal members. In another embodiment, the second transverse member is fixedly coupled between the first longitudinal member and the second longitudinal member at respective bends of the first and second longitudinal members. In yet another embodiment, the second transverse member is fixedly coupled between the first longitudinal member and the second longitudinal member at respective junctions of upper and middle sections of the first and second longitudinal members. In an embodiment, the second transverse member is coupled between the first and second longitudinal members via at least a weld or at least a fastener. In an embodiment, at least the fastener is selected from a group consisting of screws, bolts, and rivets. In an embodiment, the second transverse member at least partially lies in the first plane defined by the first axis and third axis. In an embodiment, the second transverse member also at least partially lies in the second plane defined by the second axis and third axis. Further the second transverse member is substantially parallel to the transverse axis of the vehicle.

In an embodiment, the third transverse member is fixedly coupled between the first longitudinal member and the second longitudinal member. The third transverse member is located towards the bottom end of the reinforcement frame and displaced from the second transverse member along the second axis. In an embodiment, the third transverse member is fixedly coupled between the lower sections of the respective first longitudinal member and the second longitudinal member. In another embodiment, the third transverse member is fixedly coupled between the first longitudinal member and the second longitudinal member at respective junctions between the lower and middle sections of the first and second longitudinal members. In an embodiment, the third transverse member is coupled between the first and second longitudinal members via at least a weld or at least a fastener. In an embodiment, at least the fastener is selected from a group consisting of screws, bolts, and rivets. In an embodiment, the third transverse member lies in the second plane defined by the second axis and the third axis, and is substantially parallel to the transverse axis of the vehicle.

In an embodiment, the fourth transverse member is fixedly coupled between the first longitudinal member and the second longitudinal member. The fourth transverse member is located towards the bottom end of the reinforcement frame and displaced from the third transverse member along the second axis. In an embodiment, the fourth transverse member is located at the bottom end of the reinforcement frame. In an embodiment, the fourth transverse member is fixedly coupled between the lower sections of the respective first longitudinal member and the second longitudinal member. In an embodiment, the fourth transverse member is coupled between the first and second longitudinal members via at least a weld or at least a fastener. In an embodiment, at least the fastener is selected from a group consisting of screws, bolts, and rivets. In an embodiment, the fourth transverse member lies in the second plane defined by the second axis and third axis, and is substantially parallel to the transverse axis of the vehicle.

In a preferred embodiment, the reinforcement frame comprises each of the first transverse member, the second transverse member, the third transverse member, and the fourth transverse member.

In other embodiments, additional members may be implemented in the reinforcement frame along the first and/or second axes. For example, additional members may be implemented parallel to the third axis to couple the first longitudinal member and the second longitudinal member. In another example, additional members may be implemented along the first or second axis to be coupled between any two or more adjacent of the first, second, third, and fourth transverse members. In another example, additional members may be introduced to provide additional coupling between any one of the first, second, third, and fourth transverse members and the first and/ second longitudinal members.

The reinforcement frame is adapted to provide structural support to the tailgate. Specifically, the reinforcement frame is adapted to provide increased torsional stiffness and bending stiffness to the tailgate. The reinforcement frame thus improves durability of the tailgate.

The reinforcement frame comprises a ladder structure, with the first longitudinal member and the second longitudinal member corresponding to the supports of the "ladder", and the third to fourth transverse members corresponding to the rungs on the "ladder". Such a structure is a symmetric structure, and therefore provides balanced support and load distribution to the tailgate.

Further, the reinforcement frame comprises an interconnected structure, with each member of the reinforcement frame coupled at least to one another member. As a result, structural coherence of the reinforcement frame is improved. Any load acting on the reinforcement frame may be transmitted along the structure of the reinforcement frame, thereby potentially preventing stress from building up on any one part of the reinforcement frame.

Furthermore, the different members of the reinforcement frame may be further adapted to provide specific functional support to different components of the vehicle. For example, the first transverse member may be adapted to provide structural support against hinge loads during operation of the tailgate. In another example, the second transverse member may be adapted to provide support to lamp assemblies of the vehicle. In another example, the third transverse member may be adapted to improve torsional stiffness and bending stiffness at the bottom edge of the tailgate and mitigate occurrence of oil canning. In another example, the fourth transverse member may be adapted to improve torsional stiffness and bending stiffness at the bottom edge of the tailgate and provide a latch assembly for the tailgate.

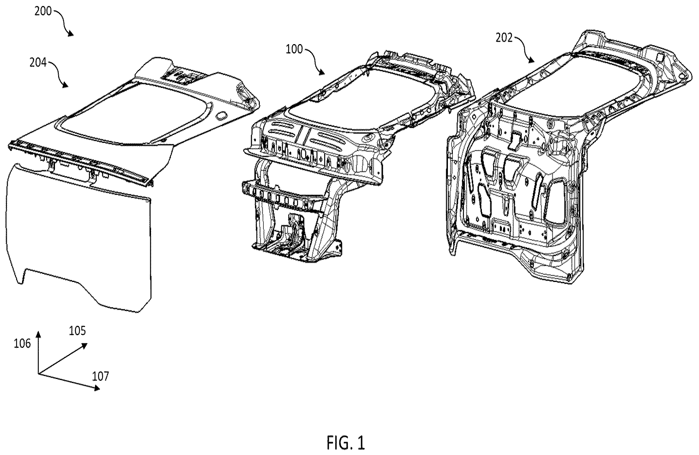

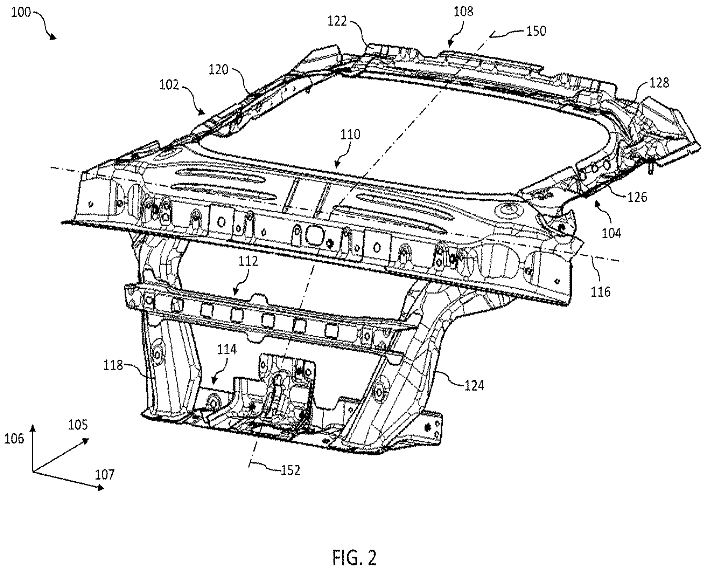

FIG. 1 illustrates a schematic view of a tailgate 200 of the vehicle, according to an embodiment of the present invention. The tailgate 200 comprises a reinforcement frame 100. The tailgate 200 comprises an inner panel assembly 202 and an outer panel assembly 204. The reinforcement frame 100 is adapted to be arranged between the inner panel assembly 202 and the outer panel assembly 204, along a longitudinal axis 105 of the vehicle. The reinforcement frame 100 is arranged between the inner panel assembly 202 and the outer panel assembly 204, such that ends of the reinforcement frame 100 correspond with respective edges of the tailgate 200. In other words, the top end, and the bottom end of the reinforcement frame 100 corresponds with the top edge and the bottom edge of the tailgate 200, respectively. Further, the first longitudinal member 102 and the second longitudinal member 104 (shown in FIG. 2) of the reinforcement frame 100 are assembled to correspond with the first side edge and the second side edge of the tailgate 200, respectively.

FIG. 2 illustrates a schematic view of the reinforcement frame 100 of the tailgate 200 (shown in FIG. 1) of a vehicle, according to an embodiment of the present invention. The reinforcement frame 100 comprises a first longitudinal member 102 and a second longitudinal member 104 arranged at an angle relative to a vertical plane defined by a first axis 150, a second axis 152, and a longitudinal axis 105 of the vehicle. Further, the first longitudinal member 102 and the second longitudinal member 104 are at least partially arranged in a first plane defined by the first axis 150 and a third axis 116, and at least partially arranged in a second plane defined by the second axis 152 and the third axis 116. The first longitudinal member 102 and the second longitudinal member 104 are laterally separated from each other. The reinforcement frame 100 comprises a first transverse member 108, a second transverse member 110, a third transverse member 112, and a fourth transverse member 114. The first transverse member 108, second transverse member 110, third transverse member 112, and fourth transverse member 114 couple the first longitudinal member 102 with the second longitudinal member 104. The first transverse member 108, second transverse member 110, third transverse member 112, and fourth transverse member 114 are parallel to the third axis 116. In an embodiment, the third axis 116 is substantially parallel to the transverse axis 107 of the vehicle.

Referring to FIGs 1 and 2, the first longitudinal member 102 of the reinforcement frame 100 is located towards a first side edge of the tailgate 200 of the vehicle. The first longitudinal member 102 comprises a lower section 118, a middle section 120, and an upper section 122. The lower section 118 is located towards a bottom end of the reinforcement frame 100, the upper section 122 is located towards a top end of the reinforcement frame 100, and the middle section 120 is located in between the lower and upper sections 118, 122. The middle section 120 comprises lower and upper ends. The lower end of the middle section 120 is located towards the bottom end of the reinforcement frame 100. The upper end of the middle section 120 is located towards the top end of the reinforcement frame 100. The lower section 118 is fixedly coupled to the lower end of the middle section 120. The upper section 122 is fixedly coupled to the upper end of the middle section 120. The lower portion of the middle section 120 towards the lower end is generally colinear with the lower section 118. The upper portion of the middle section 120 towards the upper end is at an angle relative to the lower portion. **In** other words, the middle section 120 is bent along its length. The bend is in a middle portion of the middle section 120. The upper portion of the middle section 120 extends substantially diagonally relative to the first and third axes 150, 116. The lower portion of the middle section 120 extends substantially diagonally relative to the second and third axes 152, 116. The lower section 118, the middle section 120, and the upper section 122 are coupled via at least a weld or at least a fastener. In another embodiment, the lower section 118, the middle section 120, and the upper section 122 form an integrated first longitudinal member 102.

Similarly, the second longitudinal member 104 of the reinforcement frame 100 is located towards a second side edge of the tailgate 200 of the vehicle, opposite to the first side edge. The second longitudinal member 104 comprises a lower section 124, a middle section 126, and an upper section 128. The lower section 124 is located towards a bottom end of the reinforcement frame 100, the upper section 128 is located towards a top end of the reinforcement frame 100, and the middle section 126 is located in between the lower and upper sections 124, 126. The middle section 126 comprises lower and upper ends. The lower end of the middle section 126 is located towards the bottom end of the reinforcement frame 100. The upper end of the middle section 126 is located towards the top end of the reinforcement frame 100. The lower section 124 is fixedly coupled to the lower end of the middle section 126. The upper section 128 is fixedly coupled to the upper end of the middle section 126. The lower portion of the middle section 126 towards the lower end is generally colinear with the lower section 124. The upper portion of the middle section 126 towards the upper end is at an angle relative to the lower portion. In other words, the middle section 126 is bent along its length. The bend is in a middle portion of the middle section 126. The upper portion of the middle section 126 extends substantially diagonally relative to the first and third axes 150, 116. The lower portion of the middle section 126 extends substantially diagonally relative to the second and third axes 152, 116. The lower section 124, the middle section 126, and the upper section 128 are coupled via at least a weld or at least a fastener. In another embodiment, the lower section 124, the middle section 126, and the upper section 128 form an integrated second longitudinal member 104.

Referring to FIG. 2, the upper sections 122, 128, and the upper portion of the middle sections 120, 126, of the respective first and second longitudinal members 102, 104, lie in the first plane defined by the first axis 150 and the third axis 116. The upper sections 122, 128, and the upper portion of the middle sections 120, 126 lie at an angle relative to the first axis 150. In an alternate embodiment, the upper sections 122, 128, and the upper portion of the middle sections 120, 126 lie parallel to the first axis 150. The first axis 150 also lies in the vertical plane of the longitudinal axis 105 of the vehicle, and at an angle relative to the vertical axis 106 of the vehicle. In another embodiment, the first axis 150 lies parallel to the longitudinal axis 105 of the vehicle. In yet another embodiment, the first axis 150 lies parallel to the vertical axis 106 of the vehicle.

The lower sections 118, 124, and the lower portion of the middle sections 120, 126, of the respective first and second longitudinal members 102, 104, lie in the second plane defined by the second axis 152 and the third axis 116. The lower sections 118, 124, and the lower portion of the middle sections 120, 126 lie at an angle relative to the second axis 152 different from the first axis 150. In an alternate embodiment, the lower sections 118, 124, and the lower portion of the middle sections 120, 126 lie parallel to the second axis 152. The second axis 152 also lies in the vertical plane of the longitudinal axis 105 of the vehicle, and at an angle relative to the vertical axis 106 of the vehicle. In an alternate embodiment, the second axis 152 lies parallel to the vertical axis 106 of the vehicle.

The first plane is different than the second plane. Both the first plane and the second plane also comprise the third axis 116. In an embodiment, a top edge and/or bottom edge of the tailgate 200 of the vehicle lie substantially parallel to the third axis 116. The third axis 116 is parallel to the transverse axis 107 of the vehicle.

The first transverse member 108 is fixedly coupled between the first longitudinal member 102 and the second longitudinal member 104 at the top end of the reinforcement frame 100. The first transverse member 108 is fixedly coupled between the upper sections 122, 128 of the respective first longitudinal member 102 and the second longitudinal member 104. The first transverse member 108 is coupled between the first and second longitudinal members 102, 104 via at least a weld or at least a fastener. The first transverse member 108 lies in the first plane defined by the first axis 150 and the third axis 116, and is substantially parallel to the transverse axis 107 of the vehicle.

The second transverse member 110 is fixedly coupled between the first longitudinal member 102 and the second longitudinal member 104. The second transverse member 110 is located towards the top end of the reinforcement frame 100 and displaced from the first transverse member 108 along the first axis 150. The second transverse member 110 is fixedly coupled between the first longitudinal member 102 and the second longitudinal member 104 at respective middle sections 120, 126 of the first and second longitudinal members 102, 104. In another embodiment, the second transverse member 110 is fixedly coupled between the first longitudinal member 102 and the second longitudinal member 104 at respective bends of the first and second longitudinal members 102, 104. In yet another embodiment, the second transverse member 110 is fixedly coupled between the first longitudinal member 102 and the second longitudinal member 104 at respective junctions of upper sections 122, 128 and middle sections 120, 126 of the first and second longitudinal members 102, 104. The second transverse member 110 is coupled between the first and second longitudinal members 102, 104 via at least a weld or at least a fastener.

The second transverse member 110 at least partially lies in the first plane defined by the first axis 150 and third axis 116. In an embodiment, the second transverse member 110 also at least partially lies in the second plane defined by the second axis 152 and third axis 116. Further the second transverse member 110 is substantially parallel to the transverse axis of the vehicle.

The third transverse member 112 is fixedly coupled between the first longitudinal member 102 and the second longitudinal member 104. The third transverse member 112 is located towards the bottom end of the reinforcement frame 100 and displaced from the second transverse member 110 along the second axis 152. In an embodiment, the third transverse member 112 is fixedly coupled between the lower sections 118, 124 of the respective first longitudinal member 102 and the second longitudinal member 104. In another embodiment, the third transverse member 112 is fixedly coupled between the first longitudinal member 102 and the second longitudinal member 104 at respective junctions of the lower sections 118, 124 and middle sections 120, 126 of the respective first and second longitudinal members 102, 104. The third transverse member 112 is coupled between the first and second longitudinal members 102, 104 via at least a weld or at least a fastener. The third transverse member 112 lies in the second plane defined by the second axis 152 and the third axis 116, and is substantially parallel to the transverse axis 107 of the vehicle.

The fourth transverse member 114 is fixedly coupled between the first longitudinal member 102 and the second longitudinal member 104. The fourth transverse member 114 is located towards the bottom end of the reinforcement frame 100 and displaced from the third transverse member 112 along the second axis 152. In an embodiment, the fourth transverse member 114 is located at the bottom end of the reinforcement frame 100. The fourth transverse member 114 is fixedly coupled between the lower sections 118, 124 of the respective first longitudinal member 102 and the second longitudinal member 104. The fourth transverse member 114 is coupled between the first and second longitudinal members 102, 104 via at least a weld or at least a fastener. The fourth transverse member 114 lies in the second plane defined by the second axis 152 and third axis 116, and is substantially parallel to the transverse axis 107 of the vehicle.

Furthermore, the different members of the reinforcement frame 100 may be further adapted to provide specific functional support to different components of the vehicle. For example, the first transverse member 108 may be adapted to provide structural support against hinge loads during operation of the tailgate. In another example, the second transverse member 110 may be adapted to provide support to lamp assemblies (not shown) of the vehicle. In another example, the third transverse member 112 may be adapted to improve torsional stiffness and bending stiffness at the bottom edge of the tailgate and mitigate occurrence of oil canning. In another example, the fourth transverse 114 member may be adapted to improve torsional stiffness and bending stiffness at the bottom edge of the tailgate and provide a latch assembly (not shown) for the tailgate.

While the preferred embodiments of the present invention have been described hereinabove, it may be appreciated that various changes, adaptations, and modifications may be made therein without departing from the spirit of the invention and the scope of the appended claims. It will be obvious to a person skilled in the art that the present invention may be embodied in other specific forms without departing from its spirit or essential characteristics. The described embodiments may be considered in all respects only as illustrative and not restrictive.

### ADVANTAGES OF THE INVENTION

The present invention provides a reinforcement frame for a tailgate of a vehicle that provides increased torsional stiffness of the tailgate, thereby providing improved structural support to the tailgate.

The present invention provides a reinforcement frame for a tailgate of a vehicle that improves durability of the tailgate.

The present invention provides a reinforcement frame for a tailgate that provides balanced support and load distribution to the tailgate.

The present invention provides a reinforcement frame for a tailgate that provides improved structural coherence in the tailgate, thereby preventing stress from building up on any one part of the reinforcement frame.

### LIST OF REFERENCE NUMERALS

- 100: Reinforcement Frame
- 102: First Longitudinal Member
- 104: Second Longitudinal Member
- 105: Longitudinal Axis
- 106: Vertical Axis
- 107: Transverse Axis
- 150: First Axis
- 152: Second Axis
- 108: First Transverse Member
- 110: Second Transverse Member
- 112: Third Transverse Member
- 114: Fourth Transverse Member
- 116: Third Axis
- 118: Lower Section
- 120: Middle Section
- 122: Upper Section
- 124: Lower Section
- 126: Middle Section
- 128: Upper Section
- 200: Tailgate
- 202: Inner Panel Assembly
- 204: Outer Panel Assembly

## Claims

1. A reinforcement frame (100) for a tailgate (200) of a vehicle, comprising:
- a first longitudinal member (102) and a second longitudinal member (104) arranged at an angle relative to a vertical plane defined by at least a longitudinal axis (105) of the vehicle, wherein the first longitudinal member (102) and the second longitudinal member (104) are laterally separated from each other; and
- at least one of a first transverse member (108), a second transverse member (110), a third transverse member (112), and a fourth transverse member (114),
**characterized in that** at least one of first transverse member (108), second transverse member (110), third transverse member (112), and fourth transverse member (114) couples the first longitudinal member (102) with the second longitudinal member (104), and wherein the at least one of first transverse member (108), second transverse member (110), third transverse member (112), and fourth transverse member (114) is arranged parallel to a transverse axis (107) of the vehicle.

2. The reinforcement frame (100) as claimed in claim 1, wherein the first longitudinal member (102) comprises a lower section (118), a middle section (120), and an upper section (122), wherein the lower section (118) is fixedly coupled to a lower end of the middle section (120), and the upper section (122) is fixedly coupled to an upper end of the middle section (120).

3. The reinforcement frame (100) as claimed in claim 2, wherein the lower section (118), the middle section (120), and the upper section (122) are coupled via at least a weld or at least a fastener.

4. The reinforcement frame (100) as claimed in any one of claims 1 to 3, wherein the second longitudinal member (104) comprises a lower section (124), a middle section (126), and an upper section (128), and wherein the lower section (124) is coupled to a lower end of the middle section (126), and the upper section (128) is coupled to an upper end of the middle section (124).

5. The reinforcement frame (100) as claimed in claim 4, wherein the lower section (124), the middle section (126), and the upper section (128) are coupled via at least a weld or at least a fastener.

6. The reinforcement frame (100) as claimed in any one of claims 1 to 5, wherein the first transverse member (108) is fixedly coupled between the first longitudinal member (102) and the second longitudinal member (104) at a top end of the reinforcement frame (100).

7. The reinforcement frame (100) as claimed in any one of claims 1 to 6, wherein the second transverse member (110) is fixedly coupled between the first longitudinal member (102) and the second longitudinal member (104), and is displaced from the first transverse member (108) along a first axis (150).

8. The reinforcement frame (100) as claimed in any one of claims 1 to 7, wherein the third transverse member (112) is fixedly coupled between the first longitudinal member (102) and the second longitudinal member (104), and is displaced from the second transverse member (110) along a second axis (152).

9. The reinforcement frame (100) as claimed in any one of claims 1 to 8, wherein the fourth transverse member (114) is fixedly coupled between the first longitudinal member (102) and the second longitudinal member (104), and is displaced from the third transverse member (112) along a second axis (152).

10. A tailgate (200) for a vehicle, comprising:
- an inner panel assembly (202);
- an outer panel assembly (204); and
- a reinforcement frame (100) as claimed in any one of claims 1 to 9, **characterized in that** the reinforcement frame (100) is arranged between the inner panel assembly (202) and the outer panel assembly (204) along a longitudinal axis (105) of the vehicle.
